(19) Europäisches Patentamt
European Patent Office
Office européen des brevets

(11) Veröffentlichungsnummer: **0 000 021**
**B1**

(12) # EUROPÄISCHE PATENTSCHRIFT

(21) Anmeldenummer: **78100033.6**

(22) Anmeldetag: **01.06.78**

(51) Int. Cl.³: **C 08 G 18/77, C 07 F 9/40**

(54) **Verfahren zur Herstellung von Sulfonsäure- und Phosphonatgruppen aufweisenden Polyisocyanatgemischen**

(30) Priorität: **03.06.77 DE 2725208**

(43) Veröffentlichungstag der Anmeldung:
**20.12.78 Patentblatt 78/01**

(45) Bekanntmachung des Hinweises auf die Patenterteilung:
**23.07.80 Patentblatt 80/15**

(84) Benannte Vertragsstaaten:
**BE DE FR GB**

(56) Entgegenhaltungen:
**DE - A - 2 359 614**
**DE - B - 1 127 583**

(73) Patentinhaber: **BAYER AG**
**Zentralbereich Patente, Marken und Lizenzen**
**D - 5090 Leverkusen 1, Bayerwerk (DE)**

(72) Erfinder: **Scholl, Hans-Joachim, Dr.**
**Rudolf-Sohm-Strasse 28**
**D - 5000 Köln 60 (DE)**
**Dieterich, Dieter, Dr.**
**Ludwig-Gistler-Strasse 1**
**D - 5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von Sulfonsäure- und Phosphonatgruppen aufweisenden Polyisocyanatgemischen.

Polyisocyanate mit Sulfonsäuregruppen sind bekannt (Deutsche Offenlegungsschriften 2 227 111, 2 359 614, 2 359 615, 2 524 476, 1 939 911). Ihre Herstellung ist dadurch gekennzeichnet, daß man z.B. flüssige Mehrkomponentengemische aromatischer Polyisocyanate mit Schwerfeltrioxid oder einer äquivalenten Menge Oleum, Schwefelsäure bzw. Chlorsulfonsäure vermischt und ausreagieren läßt.

Phosphonatgruppen enthaltende Polyisocyanate sind ebenfalls bekannt (DT—OS 1 127 583). Die Herstellung dieser Phosphor enthaltenden Isocyanate erfolgt z.B. dadurch, daß man Polyisocyanate durch Einwirkung von Halogenwasserstoff in Carbaminsäurehalogenide überführt und diese, bezogen auf die Carbaminsäurehalogenidgruppen, mit äquivalenten Mengen an Trialkylphosphiten nach Art einer Arbusow-Reaktion umsetzt.

Polyisocyanate die Sulfonsäure- und Phosphonatgruppen enthalten, sind jedoch noch nicht bekannt geworden. Daher ist man z.B. bei der Herstellung anorganisch-organischer Kunststoffe gemäß DT—OS 2 227 147 gezwungen, die Flammfestigkeit der Kunststoffe durch Zumischen nicht reaktionsfähiger, niedermolekularer Phosphorsäureester, wie z.B. Trichloräthylphosphat, während des Herstellungsprozesses zu erhöhen. Das Verfahren hat jedoch insofern wesentliche Nachteile, als einerseits zum Erzielen der gewünschten mechanischen Werte nur begrenzte und damit für einen vollkommenen Flammschutz nicht ausreichende Mengen an diesen niedermolekularen Verbindungen zugesetzt werden können und andererseits die zugesetzten niedermolekularen Verbindungen wegen ihres niederen Molekulargewichts dazu neigen, wieder aus dem Kunststoff herauszuwandern.

Es war daher die Aufgabe der vorliegenden Erfindung neue Polyisocyanate zur Verfügung zu stellen, welche sowohl Sulfonsäuregruppen als auch chemisch fixierten Phosphor enthalten. Diese Aufgabe konnte durch das nachstehend beschriebene erfindungsgemäße Verfahren gelöst werden.

Gegenstand der vorliegenden Erfindung ist ein Verfahren zur Herstellung von Raumtemperatur flüssigen Polyisocyanatgemischen, die

a) einen Gehalt an aromatisch gebundenen gegebenenfalls teilweise als Carbamidsäurechlorid vorliegenden Isocyanatgruppen von 10 bis 42 Gew.-%,

b) einen Gehalt an in Form von gegebenenfalls zumindest teilweise neutralisierten oder veresterten Sulfonsäuregruppen vorliegendem Schwefel von 0,5 bis 5 Gew.-%,

c) einen Gehalt an in Form von Phosphonsäurealkylester- oder Phosphonsäurearalkylester-Gruppen vorliegendem Phosphor von 0,5 bis 5 Gew.-% und

d) eine Viskosität von 10 bis 50.000 cP bei 25°C aufweisen, dadurch gekennzeichnet, daß man flüssige Mehrkomponentengemische aromatischer Polyisocyanate eines NCO-Gehalts von 20 bis 48 Gew.-% in Gegenwart eines gegebenenfalls Halogen-substituierten Trialkylphosphits oder Tris-(aralkyl)-phosphits mit Chlorsulfonsäure bei −10 bis +150°C zur Reaktion bringt, wobei die Mengen des Phosphits und der Chlorsulfonsäure so bemessen werden, daß pro Mol aromatisch gebundener Isocyanatgruppen 0,01 bis 0,5 Mol Chlorsulfonsäure und 0,01 bis 0,5 Mol Phosphit eingesetztwerden. Geeignete Ausgangsmaterialien für das erfindungsgemäße Verfahren sind alle beliebigen organischen Verbindungen, welche mindestens 2 aromatisch gebundene Isocyanatgruppen aufweisen, mindestens in einer o- oder p-Stellung zu einer aromatisch gebundenen Isocyanatgruppe unsubstituiert sind, welche von den Isocyanatgruppen und den substituierbaren aromatischen Ringen abgesehen unter den Reaktionsbedingungen inert sind und welche schließlich einen unter 70°C liegenden Schmelz- bzw. Erweichungspunkt aufweisen, sowie Gemische derartiger Polyisocyanate mit einem unter 40°C liegenden Schmeltz- bzw. Erweichungspunkt, wobei einzelne Komponenten des Gemischs auch einen über 70°C liegenden Schmelz- bzw. Erweichungspunkt aufweisen können. Beispiele geeigneter aromatischer Polyisocyanate sind 3,3' - bzw. 2,2' - Dimethyl - 4,4' - diisocyanato - diphenylmethan, 2,5,2',5' - Tetramethyl - 4,4' - diisocyanatodiphenylmethan, 3,3' - Dimethoxy - 4,4' - diisocyanato - diphenyl - methan, 3,3' - Dichlor - 4,4' - diisocyanato - diphenylmethan, 4,4' - Diisocyanato - diphenylsulfon, 4,4' - Diisocyanato-diphenyläther, 4,4' - Diisocyanato - 3,3' - dibromdiphenylmethan, 4,4' - Diisocyanato - 3,3' - diäthyl - diphenylmethan, 4,4' - Diisocyanato - diphenyl-sulfid, 1,3 - und 1,4 - Phenylendiisocyanat, 2,4 - und 2,6 - Toluylendiisocyanat sowie beliebige Gemische dieser Isomeren, Diphenylmethan - 2,4' - und/oder - 4,4' - diisocyanat, Naphthylen - 1,5 - diisocyanat, Triphenylmethan - 4,4' - 4'' - triisocyanat, Polyphenylpoly - methylen - polyisocyanate, wie sie durch Anilin - Formaldehyd - Kondensation und anschließende Phosgenierung erhalten und z.B. in den britischen Patentschriften 874 430 und 848 671 beschrieben werden, Carbodiimidgruppen aufweisende Polyisocyanate, wie sie in der deutschen Patentschrift 1 092 007 beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen

Patentschrift 761 626 und der veröffentlichten holländischen Patentanmeldung 7 102 524 beschrieben werden, Isocyanuratgruppen aufweisende Polyisocyante,. wie sie z.B. in den deutschen Patentschriften 1 022 789, 1 222 067 und 1 027 394, sowie in den deutschen Offenlegungsschriften 1 929 034 und 2 004 048 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394, in der britischen Patentschrift 889 050 und in der französischen Patentschrift 7 017 514 beschrieben werden. Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige, der o.g. Bedingung bezüglich des Schmelz- oder Erweichungspunktes entsprechende Mischungen der vorgenannten Polyisocyanate zu verwenden.

Geeignet sind auch Phosgenierungsprodukte von Kondensaten von Anilin und Aldehyden oder Ketonen, wie z.B. Acetaldehyd, Propionaldehyd, Butyraldehyd, Aceton, Methyläthylketon. Fern geeignet sind die Phosgenierungsprodukte von Kondensaten von am Kern Alkyl substituierten Anilinen, insbesondere Toluidinen mit Aldehyden oder Ketonen, wie z.B. Formaldehyd, Acetaldehyd, Butyraldehyd, Aceton, Methyläthylketon.

Weiterhin geeignet sind Umsetzungsprodukte der genannten aromatischen Polyisocyanatgemische mit 0,2 bis 50 Äquivalent-% an Polyolen, vorausgesetzt, daß die Viskosität der so erhaltenen Umsetzungsprodukte 30 000 cP bei 25°C nicht überschreitet und der NCO-Gehalt der Umsetzungsprodukte mindestens 15 Gew.-% beträgt. Geeignete Polyole zur Modifizierung der Ausgangsmaterialien sind insbesondere die in der Polyurethanchemie bekannten Polyäther- und/oder Polyesterpolyole des Molekulargewichtsbereichs 200 bis 6000, vorzugsweise 300 bis 4000, sowie niedermolekulare Polyole des Molekulargewichtsbereichs 62 bis 200. Beispiele derartiger niedermolekularer Polyole sind Äthylenglykol, Propylenglykol, Glyzerin, Trimethylolpropan, 1,4,6-Hexantriol.

Die erfindungsgemäß geeigneten aromatischen Polyisocyanate weisen im allgemeinen einen NCO-Gehalt von 15—53, vorzugsweise 25—48 und besonders bevorzugt von 25—35 Gew.-%, auf.

Für das erfindungsgemäße Verfahren besonders geeignet sind flüssige Mehrkomponentengemische aromatischer Polyisocyanate eines NCO-Gehaltes von 20 bis 48, vorzugsweise 25 bis 35 Gew.-% und einer mittleren NCO-Funktionalitat 2,0.

Bevorzugt beim erfindungsgemäßen Verfahren einzusetzende flüssige aromatische Polyisocyanatgemische sind insbesondere die Phosgenierungsprodukte von Anilin/Formaldehyd-Kondensaten, welche einen Gehalt an zweikernigen Diisocyanaten von 20 bis 90 Gew.-%, dreikernigen Triisocyanaten von 3 bis 40 Gew.-%, vierkernigen Tetraisocyanaten von 1 bis 20 Gew.-% und höherkernigen Polyisocyanaten von 1 bis 40 Gew.-P aufweisen.

Für das erindungsgemäß Verfahren weiterhin geeignet sind technische Toluylendiisocyanatgemische. Weiterhin hervorragend geeignet sind technische Destillationsrückstände, wie sie bei der Destillation von technischen Toluylendiisocyanatgemischen erhalten werden und welche einen Gehalt an freien Toluylendiisocyant-Isomeren von unter 70 Gew.-% aufweisen.Derartige Destillationsrückstände sind beispielsweise nach dem Verfahren der DT—OS 2 035 731 zugänglich. Geeignet sind insbesondere auch die in der DT—OS 2 123 183 beschriebenen Destillationsrückstände, sowie deren ebenfalls in dieser letztgenannten deutschen Patentanmeldung beschriebenen Lösungen in Phosgenierungsprodukten von Anilin/Formaldehyd-Kondensaten.

Neben den beispielt genannten aromatischen Polyisocyanaten und Chlorsulfonsäure kommen beim erfindungsgemäßen Verfahren gegebenenfalls halogensubstituierte Trialkylphosphite oder Tris-(aralkyl)-phosphite zum Einsatz, d.h. Verbindungen der Formel

$$P(OR)_3,$$

in welcher

R für einen gegebenenfalls halogen- vorzugsweise chlorsubstituierten aliphatischen Kohlenwasserstoffrest mit 1—18, vorzugsweise 1—4, Kohlenstoffatomen oder einen gegebenenfalls halogen- vorzugsweise chlorsubstituierten araliphatischen Kohlenwasserstoffrest mit insgesamt 7—15 Kohlenstoffatomen, vorzugsweise 7—8 Kohlenstoffatomen, steht.

Für das erfindungsgemäße Verfahren ebenfalls geeignet sind selbstverständlich solche Phosphite der genannten Formel, welche unterschiedliche Reset R aufweisen. Beispiele geeigneter Phosphite sind Trimethylphosphit, Triäthylphosphit, Tris-(2-chloräthyl)-phosphit, Tributylphosphit, Trioctylphosphit, Tribenzylphosphit oder O,O′-Dimethyl-O″-(2-chloräthyl)-phosphit. Bevorzugt werden die beispielhaft genannten Trialkylphosphite eingesetzt. Besonders bevorzugt sind Tris(halogenalkyl)-phosphite wie insbesondere Tris-(2-chloräthyl)-phosphit.

Bei der Durchführung des erfindungsgemäßen Verfahrens werden die beispielhaft genannten Reaktionspartner vorzugsweise in solchen Mengen eingesetzt, daß pro Mol aromatisch gebundener Isocyanatgruppen 0,01 bis 0,5, vorzugsweise 0,02 bis 0,3 und besonders bevorzugt 0,03 bis 0,2 Mol Chlorsulfonsäure und 0,01 bis 0,5, vorzugsweise 0,02 bis 0,3 und insbesondere 0,03 bis 0,2 Mol Phosphit zur

Umsetzung gelangen. Im allgemeinen werden äquimolare Mengen Phosphit und Chlorsulfonsäure eingesetzt, jedoch ist es auch möglich, Chlorsulfonsäure bzw. Phosphit in unterschiedlichen molaren Mengen einzusetzen.

Die Durchführung des erfindungsgemäßen Verfahrens erfolgt im Temperaturbereich zwischen −10 bis +150°C, vorzugsweise zwischen 0 und 100°C.

Die erfindungsgemäße Umsetzung kann sowohl durch unmittelbare Vermischung der drei Reaktionskomponenten als auch in einem Zweistufen-Prozeß durchgeführt werden, wobei im letztgenannten Fall zunächst das Polyisocyanat mit der Chlorsulfonsäure zur Umsetzung gebracht wird und anschließend die Umsetzung mit dem Phosphit erfolgt. Das erfindungsgemäße Verfahren kann sowohl in Anwesenheit als auch insbesondere bei Verwendung von niedrigviskosen Ausgangsmaterialien in Abwesenheit von unter den Reaktionsbedingung gegenüber den Ausgangsmaterialien und Endprodukten des erfindungsgemäßen Verfahrens inerten Lösungsmitteln durchgeführt werden besonders bevorzugte Lösungsmittel sind Halogenkohlenwasserstoffe wie z.B. Dichloräthan, Trichloräthan, Fluortrichlormethan, Methylenchloride oder Chlorbenzol. Die Lösungsmittel weisen vorzugsweise einen zwischen 0 und 140°C liegenden Siedepunkt auf. Gegebenenfalls kann die erfindungsgemäße. Umsetzung auch unter Druck durchgeführt werden. Im Falle der Mitverwendung von inerten Lösungsmitteln kann die Konzentration der Reaktanten in diesem Lösungsmittel innerhalb weiter Bereiche schwanken, im allgemeinen wird das Lösungsmittel in solchen Mengen eingesetzt, daß 20—100 gew.-%ige Lösungen der Reaktionspartner während der erfindungsgemäßen Umsetzung vorliegen, wobei die genannte Konzentration den Prozentsatz der Gewichtsmenge aller Reaktionspartner bezogen auf das Gewicht der Gesamtlösung angeben.

Bei der Durchführung des erfindungsgemäßen Verfahrens wird vorzugsweise das Polyisocyanat mit dem Phosphit und dem gegebenenfalls mitzuverwendenden Lösungsmittel vermischt und die Chlorsulfonsäure, welche ebenfalls in einem inerten Lösungsmittel gelöst sein kann, zu diesem vorgelegten Gemisch innerhalb einer Zeitspanne von wenigen Minuten bis mehreren Stunden unter Rühren zugegeben. Vorzugsweise erfolgt hierbei die Zugabe der Chlorsulfonsäure bei Raumtemperatur, wonach sich zur Vervollständigung der Reaktion eine Erhitzung des Reaktionsgemisches auf 50—100°C anschließt.

Die beim erfindungsgemäßen Verfahren ablaufenden chemischen Reaktionen seien am Beispeil der Umsetzung zwischen einem aromatischen Diisocyanat R' $(NCO)_2$ (R' steht für den aromatischen Kohlenwasserstoffrest eines aromatischen Diisocyanats), Chlorsulfonsäure und einem Phosphit P $(OR)_3$ (R hat die oben angegebene Bedeutung) erläutert:

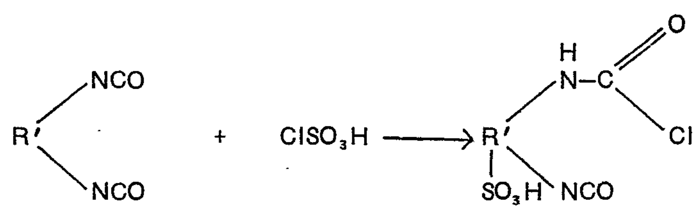

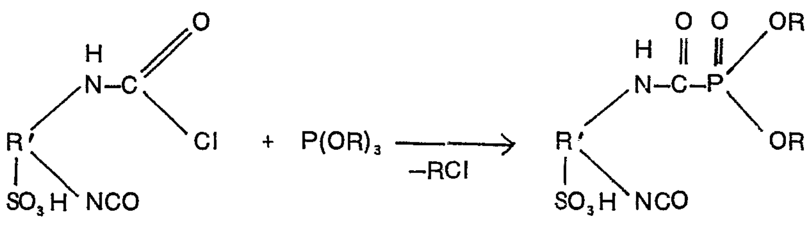


Es wird vermutet, daß die Chlorsulfonsäure zu sulfonierten Carbamidsäurechloriden reagiert, die anschließend im Sinne einer Arbusow-Reaktion zu den erfindungsgemäßen Produkten reagieren. Überraschenderweise erfolgen die Umsetzungen unter den genannten Bedigungen einheitlich, obwohl mit verschiedenen Nebenreaktionen zu rechnen ist, die sich, wie dem Fachmann bekannt ist, aus der Kombination Phosphit/Chlorsulfonsäure ergeben (z.B. Houben Weyl, Vierte Auflage Band XII/2 1964, S. 79 ff).

Besonders überraschend ist, daß auch bei Verwendung von Toluylendiisocyanat sowie Phosgenierungsprodukten der Anilin-Formaldehyd-Kondensation mit hohem Gehalt 4,4' - Zweikern-Produkt die erfindungsgemäßen Verfahrensprodukte flüssig sind, insbesondere, wenn auf 1 NCO Äquivalent nicht mehr als 0,2 Mol Chlorsulfonsäure und nicht mehr als 0,2 Mol organisches Phosphit eingesetzt werden.

Die nach dem erfindungsgemäßen Verfahren zugänglichen Sulfonsäure- und Phosphonatgruppen aufweisenden, vzw. flüssigen Polyisocyanate sind gekennzeichnet durch
a) einen NCO-Gehalt von 10 bis 42 Gew.-%, vorzugsweise 25 bis 35 Gew.-%,
b) einen Schwefelgehalt von 0,5—5 Gew.-%,
c) einen Phosphorgehalt von 0,5—5 Gew.-% und
d) eine Viskosität von 10 bis 50 000, vorzugsweise 100 bis 20 000 cP bei 25°C.

Im Falle der Verwendung eines molaren Überschusses an Chlorsulfonsäure bezogen auf das eingesetzte Phosphite liegen die Isocyanatgruppen in den erfindungsgemäßen Verfahrensprodukten teilweise in Form von Carbamidsäure-chlorid-Gruppen vor. Die genannten Zahlenwerte bezüglich des NCO-Gehaltes der erfindungsgemäßen Produkte umfassen auch derartige gegebenenfalls in Form von Carbamidsäure-chlorid-Gruppen vorliegende NCO-Gruppen, wobei bei der Berechnung der NCO-Gehalte auch in diesem Fall das Molekulargewicht der NCO-Gruppe (42) zugrundegelegt wurde. Da die Sulfonsäuregruppen im Anschluß an die erfindungsgemäße Umsetzung, wie weiter unten ausgeführt, ohne Schwierigkeiten zumindest teilweise neutralisiert oder verestert werden könne, bezieht sich der angegebenen Schwefelgehalt auf die in den Verfahrensprodukten vorliegenden gegebenenfalls zumindest teilweise neutralisierten oder veresterten Sulfonsäuregruppen.

Die erfindungsgemäßen Sulfonsäure- und Phosphonatgruppen aufweisenden aromatischen Polyisocyanate stellen wertvolle Ausgangsmaterialien zur Herstellung von Formstoffen un kompakten Kunststoffen dar. Sie lassen sich ohne Schwierigkeiten nach üblichen Techniken, wie Gießverfahren, sowie über die üblichen Förder- und Dosiersysteme verarbeiten. Die nach dem erfindungsgemäßen Verfahren zugänglichen aromatischen phosphonatisierten Isocyanatosulfonsäuren können im Anschluß an ihre Herstellung durch eine Neutralisationsreaktion ganz- oder teilweise in die entsprechenden Isocyanatosulfonate überführt werden.

Geeignete Neutralisationsmittel sind organische oder anorganische Basen, wie zum Beispiel Trimethylamin, Triäthylamin, Tributylamin, Dimethylanilin, Urotropin, Natriumhydrogencarbonat, Natriumhydroxid, Calciumcarbonat, Magnesiumcarbonat, Calciumhydroxid, Magnesiumhydroxid, Magnesiumoxid, Zinkoxid, Natriumphosphat. Dabei können anorganische Neutralisationsmittel, welche selbst nicht stark basisch reagieren, wie Calciumcarbonat, Magnesiumcarbonat, Dolomit, Kreide, Natriumphosphat, ohne weiteres auch in hohem Überschuß als Füllstoff eingesetzt werden. Durch die Überführung der Sulfonsäuregruppen in die entsprechenden Sulfonatgruppen wird die Hydrophilie und Reaktivität der erfindungsgemäßen Produkte gesteigert. Eine Überführung der entsprechenden phosphonatisierten Isocyanatosulfonsäuren in die entsprechenden Sulfonsäure-ester mit Epoxiden bzw. Oxatonen kann ebenfalls mit Erfolg zur Reduzierung der sauren Anteile angewendet werden. Geeignete Epoxide sind z.B.: Äthylenoxid, Propylenoxid, Epichlorhydrin.

Ausgangsmaterialien für die nachstehend beschriebenen Beispiele:

$A_1$: Von rohem Phosgenierungsprodukt eines Anilin/Formaldehyd-Kondensats wird soviel Diisocyanatodiphenylmethan abdestilliert, daß der Destillationsrüchstand bei 25°C eine Viskositat von 100 cP aufweist. (2-Kernanteil: 59,7 Gew.-%; 3-Kernanteil: 21,3 Gew.-%; Anteil an höherkernigen Polyisocyanaten: 19,0 Gew.-%). NCO-Gehalt: 31,5 Gew.-%.

$A_2$: Entsprechend hergestelltes Polyisocyanat mit einer Viskosität bei 25°C von 200 cP. (2-Kernanteil: 44,3 Gew.-%; 3-Kernanteil: 23,5 Gew.-%; Anteil an höher-kernigen Polyisocyanaten: 32,2 Gew-%). NCO-Gehalt: 31,1 Gew.-%.

$A_3$: Entsprechend hergestelltes Polyisocyanat mit einer Viskosität bei 25°C von 400 cP. (2-Kernanteil: 45,1 Gew-%; 3-Kernantiel: 22,3 Gew-%; Antiel an höherkernigen Polyisocyanaten: 32,6 Gew.-%). NCO-Gehalt: 30,9 Gew-%.

$A_4$: Gemisch aus Toluylen-2,4-diisocyanat und Toluylen-2,6-diisocyanat im Verhältnis 80:20. NCO-Gehalt: 48 Gew.-%.

$A_5$: 40 %ige Lösung eines bei der Destillation von $A_4$ anfallenden Destillationsrückstands in $A_4$. NCO-Gehalt: 38,3 Gew.-%.

$A_6$: Präpolymer aus 90 Gew.-% $A_2$ und 10 Gew.-% eines auf Trimethylolpropan gestarteten Polyäthylenglykols der OH-Zahl 250, mit einer Viskosität bei 25°C von 21 000 cP. NCO-Gehalt: 26,2 Gew.-%.

### Beispiel 1

1000 g Polyisocyanat $A_3$ und 78,5 g Tris-(2-chloräthyl)-phosphit werden vorgelegt. Bei 20—30°C läßt man innerhalb von 2 Stunden 41,3 g Chlorsulfonsäure in 17 g Methylenchlorid zutropfen. Man läßt 1 Stunde bei 100°C nachrühren und erhält ein Produkt mit folgenden Werten:

Schwefelgehalt: 1,0 %
Phosphorgehalt: 0,8 %
NCO-Gehalt: 26,5 %
Viskosität: 1200 cP
(25°C)

Entsprechend hergestellte Produkte sind in Tabelle 1 aufgeführt. Dichloräthan wurde in einigen Beispielen als Lösungsmittel mitverwendet und nach Reaktionsende bei 50°C/20 Torr abdestilliert.

TABELLE 1

| Beisp. | Isocyanat | $CH_2ClCH_2Cl$ | $CH_2Cl_2$ | $ClSO_3H$ | $P(OC_2H_4Cl)_3$ | Temp. °C | Nachrühren | S Gew.-% | P Gew.-% | NCO Gew.-% | Viskosität cP/25°C |
|---|---|---|---|---|---|---|---|---|---|---|---|
| 1 | 1000 g $A_3$ | – | 17 g | 41,3 g | 78,5 g | 20–30 | 1 Std. 1000°C | 1,0 | 0,8 | 26,5 | 1200 |
| 2 | 1000 g $A_3$ | – | 16 g | 40,1 g | 48,0 g | 20–30 | ,, | 1,0 | 0,5 | 27,0 | 2000 |
| 3 | 1000 g $A_3$ | – | 10 g | 24,5 g | 47,0 g | 20–30 | 1 Std. 80°C | 0,5 | 0,5 | 29,0 | 650 |
| 4 | 1000 g $A_3$ | – | 24 g | 58,8 g | 111,8 g | 20–30 | 1 Std. 50°C | 1,4 | 1,1 | 25,0 | 1100 |
| 5 | 1000 g $A_3$ | – | 24 g | 58,8 g | 111,8 g | 20–30 | 1 Std. 80°C | 1,4 | 1,1 | 25,5 | 1800 |
| 6 | 1000 g $A_3$ | – | 24 g | 58,8 g | 111,8 g | 20–30 | 1 Std. 100°C | 1,4 | 1,1 | 25,3 | 2300 |
| 7 | 1000 g $A_3$ | – | 74 g | 178,0 g | 385,0 g | 20–30 | 1 Std. 80°C | 3,0 | 2,7 | 16,8 | 8000 |
| 8 | 1000 g $A_3$ | – | 118 g | 294,0 g | 617,0 g | 20–30 | ,, | 4,0 | 3,5 | 12,0 | 45000 |
| 9 | 1000 g $A_3$ | 411 g | – | 58,8 g | 111,8 g | 20–30 | 1,5 Std. 50°C, 20 mm | 1,4 | 1,1 | 25,6 | 2100 |
| 10 | 1000 g $A_2$ | – | 17 g | 41,3 g | 78,5 g | 20–30 | 1 Std. 80°C | 1,0 | 0,8 | 26,4 | 1000 |
| 11 | 1000 g $A_1$ | – | 24 g | 58,8 g | 111,8 g | 20–30 | ,, | 1,4 | 1,1 | 25,2 | 900 |
| 12 | 1000 g $A_4$ | – | 24 g | 58,8 g | 111,8 g | 20–30 | 1 Std. 100°C | 1,4 | 1,1 | 38,8 | 300 |

TABELLE 1 (Fortsetzung)

| Beisp. | Isocyanat | $CH_2ClCH_2Cl$ | $CH_2Cl_2$ | $ClSO_3H$ | $P(OC_2H_4Cl)_3$ | Temp. °C | Nachrühren | S Gew.-% | P Gew.-% | NCO Gew.-% | Viskosität cP/25 °C |
|---|---|---|---|---|---|---|---|---|---|---|---|
| 13 | 1000 g $A_4$ | – | 57 g | 143,5 g | 171,0 g | 20–30 | 1,5 Std. 100 °C | 3,0 | 1,5 | 32,0 | 300 |
| 14 | 1000 g $A_4$ | 411 g | – | 58,8 g | 111,8 g | 20–30 | 1,5 Std. 50 °C, 20 mm | 1,4 | 1,1 | 37,9 | 300 |
| 15 | 1000 g $A_5$ | – | 24 g | 58,8 g | 111,8 g | 20–30 | 1 Std. 80 °C | 1,4 | 1,1 | 30,3 | 4700 |
| 16 | 1000 g $A_6$ | – | 24 g | 58,8 g | 111,8 g | 20–30 | ,, | 1,4 | 1,1 | 20,4 | 7000 |

**Patentansprüche**

1. Verfahren zur Herstellung von bei Raumtemperatur flüssigen Polyisocyanatgemischen, die
a) einen Gehalt an aromatischen gebundenen gegebenenfalls teilweise als Carbamidsäurechlorid vorliegenden Isocyanatgruppen von 10 bis 42 Gew.-%,
b) einen Gehalt an in Form von gegebenenfalls zumindest teilweise neutralisierten oder veresterten, aromatisch gebundenen Sulfonsäuregruppen vorliegendem Schwefel von 0,5 bis 5 Gew.-%,
c) einen Gehalt an in Form von Phosphonsäurealkylester- oder Phosphonsäurearalkylester-Gruppen vorliegendem Phosphor von 0,5 bis 5 Gew.-% und
d) eine Viskosität von 10 bis 50.000 cP bei 25°C
aufweisen, dadurch gekennzeichnet, daß man flüssige Mehrkomponentengemische aromatischer Polyisocyanate eines NCO-Gehalts von 20 bis 48 Gew.-% in Gegenwart eines gegebenenfalls Halogen-substituierten Trialkylphosphits oder Tris-(aralkyl)-phosphits mit Chlorsulfonsäure bei −10 bis +150°C zur Reaktion bringt, wobei pro Mol aromatisch gebundener Isocyanatgruppen 0,01 bis 0,5 Mol Chlorsulfonsäure und 0,01 bis 0,5 Mol Phosphit eingesetzt werden.

2. Verfahren gemäß Anspruch 1, dadurch gekennzeichnet, daß man die Umsetzung in Gegenwart von unter den Reaktions- bedingungen inerten Lösungsmitteln durchführt.

3. Verfahren gemäß Anspruch 1 und 2, dadurch gekennzeichnet, daß man als gegebenenfalls halogensubstituiertes Trialkylphosphit Tris-(2-chlorethyl)-phosphit verwendet.

**Claims**

1. A process for the preparation of polyisocyanate mixture which are liquid at room temperatures and which
a) contain from 10—42%, by weight of aromatically bound isocyanate groups optionally partly present in the form of carbamic acid chloride,
b) contain from 0.5—5% by weight of sulphur in the form of aromatically bound sulphonic acid groups which may be at least partly neutralized or esterified.
c) contain from 0.5—5% by weight of phosphorus in the form of phosphonic acid alkyl ester groups or phosphonic acid aralkyl ester groups and
d) have a viscosity of from 10—50,000 cP at 25°C.
characterized in that liquid multi-component mixtures of aromatic polyisocyanates having an isocyanate content of 20—48% by weight are reacted with chlorosulphonic acid at −10°C to +150°C in the presence of a trialkyl phosphite or tris-(aralkyl)-phosphite which may be substituted with halogen, wherein 0.01 to 0.5 mol of chlorosulphonic acid and 0.01 to 0.5 mol of phosphite are used per mol of aromatically bound isocyanate groups.

2. The process according to Claim 1, characterized in that the reaction is carried out in the presence of solvents which are inert under the reaction conditions.

3. A process according to Claims 1 and 2, characterized in that tris-(2-chloroethyl)-phosphite is used as the trialkyl phosphite optionally substituted by halogen.

**Revendications**

1. Procédé de production de mélanges de polyisocyanates liquides à la température ambiante, qui ont:
(a) une teneur de 10 à 42 % en poids en groupes isocyanate aromatiques liés, existant éventuellement en partie sous forme de chlorure d'acide carbamique,
(b) une teneur de 0,5 à 5 % en poids en soufre présent sous la forme de groupes acide sulfonique en liaison aromatique, éventuellement au moins partiellement neutralisés ou estérifiés,
(c) une teneur de 0,5 à 5 % en poids en phosphore présent sous la forme de groupes ester alkylique ou ester aralkylique d'acide phosphonique et
(d) une viscosité de 10 à 50 000 centipoises à 25°C,
caractérisé en ce qu'il consiste à faire réagir des mélanges liquides de plusieurs composants formés de polyisocyanates aromatiques ayant une teneur en NCO- de 20 à 48 % en poids en présence d'un phosphite trialkylique ou tris-(aralkylique)éventuellement substitué par un halogène, avec l'acide chlorosulfonique à une température de −10 à +150°C, en utilisant, par mole de groupes isocyanate en liaison aromatique, 0,01 à 0,5 mole d'acide chlorosulfonique et 0,01 à 0,5 mole de phosphite.

2. Procédé suivant la revendication 1, caractérisé en ce que la réaction est conduite en présence de solvants inertes dans les conditions réactionnelles.

3. Procédé suivant l'une des revendications 1 et 2, caractérisé en ce qu'il consiste à utiliser le phosphite de tris-(2-chloréthyle) comme phosphite trialkylique éventuellement substitué par un halogène.